# EUROPÄISCHE PATENTSCHRIFT

(11) **EP 3 623 722 B1**
(45) Veröffentlichungstag und Bekanntmachung des Hinweises auf die Patenterteilung: **28.02.2024**
(21) Anmeldenummer: 19194867.8
(22) Anmeldetag: 02.09.2019
(51) Int. Cl.: F24S 25/613, F24S 25/634, F24S 25/60, F24S 25/632, F24S 25/00

(54) **DACHHAKEN**
ROOF HOOK
CROCHET DE TOIT

(30) Priorität: 11.09.2018 DE 102018122176
(43) Veröffentlichungstag der Anmeldung: 18.03.2020
(73) Patentinhaber: SL Rack GmbH, 83527 Haag (DE)
(72) Erfinder: Schletter, Ludwig, 83527 Haag i. OB (DE)
(74) Vertreter: Lichtnecker, Markus Christoph

(56) Entgegenhaltungen:
- EP-A2- 2 080 965
- WO-A1-2013/037384
- DE-A1- 10 132 557
- DE-A1-102011 084 215
- DE-U1-202009 006 367
- DE-U1-202010 013 976
- DE-U1-202018 105 206

## Beschreibung

Die Erfindung betrifft einen Dachhaken zur Befestigung einer Montageschiene an einer Dachkonstruktion, umfassend einen Grundträger zur Befestigung des Dachhakens an der Dachkonstruktion und einen Schienenträger zur Befestigung der Montageschiene am Dachhaken, wobei der Dachhaken höhenverstellbar ist.

Dachhaken sind grundsätzlich bekannt. Diese werden beispielsweise zur Montage von Solarpaneelen und/oder Photovoltaik-Modulen eingesetzt. Die Solarpaneele und/oder Photovoltaik-Module werden z.B. an den Montageschienen, welche auch Tragschienen genannt werden, montiert.

Die Dachhaken werden an Dachkonstruktionen, beispielsweise an Unterkonstruktionen von Schrägdächern befestigt. Dazu kann ein Grundträger des Dachhakens z.B. eine Grundplatte mit Plattenaussparungen umfassen. An den Plattenaussparungen kann die Grundplatte beispielsweise mittels Schrauben und/oder Bolzen an der Dachkonstruktion befestigt, z.B. verschraubt, werden.

Wird z.B. eine Montageschiene an mehreren Dachhaken montiert, müssen dabei auftretende Unebenheiten der Dachkonstruktion und/oder der Dachdeckung ausgeglichen werden.

Durch die Höhenverstellbarkeit kann insbesondere der Abstand zwischen der Montageschiene und der Dachkonstruktion und/oder der Dachdeckung eingestellt werden.

Die Höhenverstellung wird bisher meist dadurch erreicht, dass der Dachhaken ein Langloch aufweist, durch den ein relativ hierzu bewegliches Bauteil mittels einer Schraube an der gewünschten Position befestigt wird, siehe z.B. DE 10 2011 084 215 A1, DE 101 32 557 A1 DE 20 2010 013 976 U1 und DE 20 2009 006 367 U1.

Dies hat jedoch den Nachteil, dass sich die Montage vergleichsweise schwierig gestaltet. So kann beispielsweise die Schraube leicht nach unten fallen und/oder verloren gehen. Auch ist stets ein Werkzeug notwendig.

EP 2 080 965 A1 offenbart einen Dachhaken, wobei eine Schiene durch Spannstücke am Dachhaken werkzeuglos befestigt wird.

Es ist eine Aufgabe der Erfindung, einen Dachhaken der eingangs genannten Art sowie ein Verfahren zur Befestigung einer Montageschiene am Dachhaken dahingehend zu verbessern, dass eine Montage auf einfache Weise, insbesondere werkzeuglos, erfolgt.

Die Lösung dieser Aufgabe erfolgt durch die Vorrichtung bzw. das Verfahren der unabhängigen Ansprüche.

Erfindungsgemäß weist der Dachhaken einen Fuß, z.B. einen Rastfuß, und einen Verbindungsabschnitt auf, der den Fuß mit dem Schienenträger verbindet.

Der Verbindungsabschnitt kann vorzugsweise einen runden oder rechteckigen Querschnitt aufweisen.

Vorzugsweise können der Schienenträger, der Verbindungsabschnitt und/oder der Fuß einstückig ausgebildet sein. Der Fuß kann z.B. wie eine, insbesondere baugleiche, Verlängerung des Verbindungsabschnitts ausgebildet sein und/oder beispielsweise einen Teil des Verbindungsabschnitts bilden. Alternativ sind auch, zumindest teilweise, separate Bauteile denkbar.

Der Fuß und der Grundträger können insbesondere einstückig geformt sein. Alternativ sind auch separate Bauteile denkbar.

Zur Befestigung des Fußes am Grundträger kann insbesondere eine Einhänge-, Klett-, Klammer-, Klemm-, Steck-, Rast-, Magnet-, Zapfen- und/oder Schraubvorrichtung vorgesehen sein. Die Befestigung kann insbesondere werkzeuglos erfolgen. Beispielsweise kann der Fuß dazu ausgebildet sein, höhenverstellbar am Grundträger einzurasten.

Der Schienenträger weist eine Rastvorrichtung zur höhenverstellbaren Befestigung der Montageschiene am Dachhaken auf. Die Montage erfolgt werkzeuglos.

Für die Höhenverstellung ist somit vorzugsweise keine Schraubvorrichtung vorgesehen. Die Rastvorrichtung hat gegenüber einer Schraubvorrichtung den Vorteil, dass sich die Montage einfacher gestaltet. So wird beispielsweise kein Werkzeug benötigt, wodurch Zeit eingespart wird. Auch können keine kleinteiligen Montageteile, z.B. Schrauben, nach unten fallen.

Insbesondere sind verschiedene Raststufen vorgesehen. Die Höhenverstellung erfolgt dadurch gestuft und nicht stufenlos.

Erfindungsgemäß weist die Rastvorrichtung einen am Verbindungsabschnitt angeordneten Rastabschnitt auf. Der Rastabschnitt kann, vorzugsweise unlösbar, mit dem Verbindungsabschnitt verbunden sein. Auch kann der Rastabschnitt einstückig mit dem Verbindungsabschnitt geformt sein. Insbesondere kann der Rastabschnitt einen Teil des Verbindungsabschnitts bilden.

Insbesondere kann der Rastabschnitt an einer Seite des Verbindungsabschnitts vorgesehen sein, während die anderen Seiten vorzugsweise keinen Rastabschnitt aufweisen. Der Rastabschnitt ist insbesondere der Montageschiene zugewandt.

Weiterbildungen der Erfindung sind auch den abhängigen Ansprüchen, der Beschreibung sowie den beigefügten Zeichnungen zu entnehmen.

Nach einer Ausführungsform weist der Rastabschnitt mehrere, insbesondere parallel zueinander orientierte, Aussparungen auf.

Beispielsweise können mindestens zwei, drei, vier, fünf, sechs, sieben, acht, neun, zehn oder mehr Aussparungen vorgesehen sein. Die Aussparungen können insbesondere zwischen 1 mm und 10 mm, vorzugsweise 2 mm, voneinander beabstandet sein.

Eine Aussparung, insbesondere sämtliche Aussparungen, kann als längliche, vorzugsweise horizontale, Vertiefung ausgebildet sein.

Insbesondere kann der Rastabschnitt eine Länge zwischen 20 mm und 40 mm, z.B. 27,5 mm oder 32 mm, aufweisen.

Der Rastabschnitt kann beispielsweise sägezahnförmig geformt sein. Insbesondere kann die Öffnung der Aussparung schräg nach unten bzw. oben verlaufen. Alternativ kann die Aussparung auch rechteckig geformt sein.

Alternativ zu mehreren Aussparungen kann der Rastabschnitt auch lediglich eine Aussparung aufweisen. In diesem Fall weist eine Rasteinheit vorzugsweise mehrere Rastnasen auf.

Auch der umgekehrte Fall ist denkbar. So kann auch eine Rasteinheit eine oder mehrere Aussparungen aufweisen, während der Rastabschnitt eine oder mehrere Rastnasen aufweist.

Erfindungsgemäß weist die Rastvorrichtung eine Rasteinheit auf, wobei die Rasteinheit und der Rastabschnitt als separate Bauteile ausgebildet sind.

Die Bauteile sind folglich nicht einstückig. Sind die Rasteinheit und der Rastabschnitt nicht aneinander verrastet, so sind diese Bauteile voneinander, insbesondere vollständig, getrennt.

Vorzugsweise weist die Rasteinheit mehrere, z.B. mindestens zwei, drei, vier, fünf, sechs, sieben, acht, neun, zehn oder mehr Rastnasen auf. Die Rasteinheit kann somit insbesondere gleichzeitig in mehrere Aussparungen des Rastabschnitts einrasten. Ein sicherer Halt wird dadurch ermöglicht.

Nach einer weiteren Ausführungsform sind die Rasteinheit und der Rastabschnitt relativ zueinander bewegbar, insbesondere verschiebbar.

Insbesondere kann der Rastabschnitt starr mit dem Verbindungsabschnitt verbunden bzw. an diesem ausgeformt sein. Die Rasteinheit, an der schließlich die Montageschiene befestigt wird, kann hingegen verschoben werden.

Erfindungsgemäß weist die Rasteinheit ein Auflageund/oder ein Eingreifelement für die Montageschiene auf.

Das Auflage- und/oder Eingreifelement kann, insbesondere unlösbar, mit der Rasteinheit verbunden sein. Auch kann das Auflage- und/oder Eingreifelement einstückig mit der Rasteinheit geformt sein. Insbesondere kann das Auflageund/oder Eingreifelement einen Teil der Rasteinheit bilden.

Das Auflage- und/oder Eingreifelement ist vorzugsweise an einem oberen Bereich der Rasteinheit angeordnet.

Die Montageschiene kann auf dem Auflageelement aufliegen. Das Auflageelement kann insbesondere flächig ausgebildet sein.

Vorzugsweise erstreckt sich das Auflageelement im montierten Zustand rechtwinklig zum Verbindungsabschnitt bzw. zum Rastabschnitt.

Das Eingreifelement kann beispielsweise in eine Nut der Montageschiene eingreifen. Auf diese Weise kann die Montageschiene fixiert und vor einem ungewollten Lösen geschützt werden.

Erfindungsgemäß weist der Schienenträger eine Klemmvorrichtung zum Fixieren der Rasteinheit in einer Rastposition auf.

Vorzugsweise kann die Rasteinheit zunächst in die gewünschte Höhe verstellt werden und am Rastabschnitt verrasten. Durch die Klemmvorrichtung kann nun eine Fixierung erfolgen. Schrauben oder dergleichen sind insbesondere nicht notwendig. So erfolgt die Montage vorzugsweise werkzeuglos, wodurch Zeit und somit Kosten gespart werden. Auch die Demontage kann entsprechend werkzeuglos erfolgen.

Erfindungsgemäß weist die Klemmvorrichtung eine Hülse auf.

Die Hülse kann um den Verbindungsabschnitt anordbar bzw. angeordnet sein. Die Hülse kann vorzugsweise vollständig geschlossen sein. Alternativ kann diese auch unterbrochen sein und beispielsweise einen Schlitz aufweisen.

Die Hülse kann, je nach Ausgestaltung des Verbindungsabschnitts, z.B. einen runden oder rechteckigen Querschnitt aufweisen.

Vorzugsweise ist die Hülse relativ zum Verbindungsabschnitt und/oder zum Rastabschnitt bewegbar, insbesondere verschiebbar. So kann die Hülse entsprechend der jeweiligen Rastposition verstellt werden.

Erfindungsgemäß weist die Klemmvorrichtung ein Klemmelement, insbesondere eine Klammer, auf.

Das Klemmelement kann insbesondere als Klemmkeil ausgebildet sein. Erfindungsgemäß kann das Klemmelement in einen Spalt zwischen der Hülse und den Verbindungsabschnitt platziert, insbesondere gesteckt, werden, um die Hülse zu fixieren. Das Klemmelement kann vorzugweise an zwei gegenüberliegenden Seiten jeweils eine Klemmbacke, z.B. mit einer Einkerbung, aufweisen. Die Klemmbacken können beweglich, insbesondere federnd, ausgebildet sein. So können diese zusammengedrückt werden, um in den Bereich zwischen der Hülse und dem Verbindungsabschnitt eingeschoben werden zu können.

Unterhalb der Hülse können sich die Klemmbacken wieder entspannen. Die Hülse ist nun im Bereich der Einkerbungen der Klemmbacken fixiert.

Durch das Klemmelement wird die Rasteinheit zwischen der Hülse und dem Rastabschnitt eingeklemmt.

Auf diese Weise wird die Montageschiene zwischen dem Auflage- und/oder Eingreifelement und dem Verbindungsabschnitt bzw. dem Rastabschnitt eingeklemmt. Die Montageschiene wird dadurch insbesondere formschlüssig fixiert.

Das Klemmelement kann insbesondere ein Kunststoffmaterial umfassen oder daraus bestehen. Beispielsweise kann das Klemmelement als Druck- und/oder Pressteil ausgebildet sein. Die weiteren Bauteile des Dachhakens umfassen vorzugsweise ein Metallmaterial, z.B. Aluminium oder Edelstahl, oder bestehen daraus. Das Kunststoffmaterial weist gute Gleiteigenschaften auf Metall auf. Das Klemmelement lässt sich somit gut verschieben.

Nach einer weiteren Ausführungsform ist der Fuß dazu ausgebildet, höhenverstellbar am Grundträger einzurasten.

Dies ermöglicht eine zusätzliche Anpassung der Höhe.

Die Montage des Rastfußes am Grundträger erfolgt insbesondere werkzeuglos.

Für die Höhenverstellung ist somit vorzugsweise keine Schraubvorrichtung vorgesehen. Die Rastvorrichtung hat gegenüber einer Schraubvorrichtung den Vorteil, dass sich die Montage einfacher gestaltet. So wird beispielsweise kein Werkzeug benötigt, wodurch Zeit eingespart wird. Auch fallen keine kleinteiligen Montageteile, z.B. Schrauben, nach unten.

Insbesondere sind verschiedene Raststufen vorgesehen. Die Höhenverstellung erfolgt dadurch gestuft und nicht stufenlos.

Der Rastfuß und der Grundträger sind insbesondere als separate Bauteile ausgebildet, d.h. diese Bauteile sind nicht einstückig. Sind der Rastfuß und der Grundträger nicht aneinander verrastet, so sind diese Bauteile voneinander, insbesondere vollständig, getrennt.

Dadurch gestaltet sich die Montage besonders einfach. So ist der Rastfuß bei einer Befestigung des Grundträgers an der Dachkonstruktion nicht im Weg.

Gemäß einer Ausführungsform sind der Rastfuß und der Grundträger vollständig voneinander lösbar, insbesondere werkzeuglos.

Vorzugsweise sind der Rastfuß und der Grundträger nicht gelenkig miteinander verbunden. So ist der Rastfuß stets parallel zur Dachkonstruktion und/oder der Dachdeckung ausgerichtet. Ein Neigungsausgleich ist insbesondere nicht vorgesehen. Die Rastverbindung dient vorzugsweise lediglich der Höhenverstellung.

Insbesondere kann die Montage und/oder Demontage des Rastfußes am bzw. vom Grundträger werkzeuglos erfolgen. Dadurch können Zeit und somit Kosten eingespart werden.

Nach einer weiteren Ausführungsform weist der Rastfuß ein erstes Rastelement und ein zweites Rastelement auf, wobei die Rastelemente voneinander beabstandet sind. Insbesondere kann der Rastfuß an zwei Seiten mit dem Grundträger verrasten. Die Rastelemente können insbesondere über einen Brückenabschnitt miteinander verbunden sein. Der Abstand zwischen den Rastelementen kann insbesondere mindestens 1 cm, 2 cm, 3 cm, 4 cm, 5 cm, 6 cm, 7 cm, 8 cm, 9 cm oder 10 cm betragen.

Vorzugsweise weist jedes Rastelement eine oder mehrere Rastnasen auf. Die Rastnase des ersten Rastelements kann insbesondere anders geformt sein als die Rastnase des zweiten Rastelements. Alternativ können die Rastnasen auch gleich geformt sein. Insbesondere können die Rastnasen in dieselbe Richtung orientiert sein.

Gemäß einer weiteren Ausführungsform sind die Rastelemente relativ zueinander bewegbar, insbesondere verschwenkbar.

Insbesondere kann das erste Rastelement als starrer Abschnitt des Rastfußes ausgebildet sein. Vorzugsweise ist das zweite Rastelement gelenkig gelagert, beispielsweise an einem Brückenabschnitt zwischen den Rastelementen.

Das zweite Rastelement kann insbesondere zwischen einer Warteposition und einer Rastposition verschwenkt werden.

Nach einer weiteren Ausführungsform ist eine Fixiervorrichtung zum Fixieren des zweiten Rastelements in einer Rastposition vorgesehen.

Die Rastelemente können vorzugsweise in Aufnahmeelemente des Grundträgers einrasten.

Die Fixiervorrichtung kann insbesondere als Einrasthilfe ausgebildet sein. So kann insbesondere das erste Rastelement in einer gewünschten Höhe in eine Aussparung eines ersten Aufnahmeelements eingebracht, z.B. eingefädelt oder eingeschoben, werden. Das zweite Rastelement liegt dabei zunächst auf einer Aussparung eines zweiten Aufnahmeelements auf.

Insbesondere werden das erste und/oder zweite Rastelement von oben verrastet und beispielsweis nicht seitlich eingeschoben.

Das zweite Rastelement und das zweite Aufnahmeelement sind dabei vorzugsweise derart ausgebildet, dass sich das zweite Rastelement auf derselben Höhe wie das erste Rastelement befindet.

Erst durch eine Betätigung, insbesondere ein Verschieben, der Fixiervorrichtung rastet das zweite Rastelement in die Aussparung des zweiten Aufnahmeelements ein und wird dort fixiert.

Dazu kann das zweite Rastelement vorzugsweise zwei Schenkel aufweisen, welche z.B. V-förmig zueinander angeordnet sind. Ein Schenkel kann dabei eine Rastnase zum Einrasten aufweisen. Der andere Schenkel kann von der Fixiervorrichtung fixiert werden. Insbesondere kann ein Vorsprung, z.B. eine Auswölbung, vorgesehen sein. Wird die Fixiervorrichtung über den Vorsprung bewegt, rastet die Rastnase ein. Ein ungewolltes Lösen wird dadurch verhindert.

Gemäß einer weiteren Ausführungsform ist die Fixiervorrichtung verschiebbar ausgebildet. Insbesondere kann die Fixiervorrichtung relativ zu einem Brückenabschnitt zwischen dem ersten und dem zweiten Rastelement verschoben werden.

Der Brückenabschnitt und die Fixiervorrichtung können beispielsweise als Kulissenführung ausgebildet sein. Insbesondere kann die Fixiervorrichtung den Brückenabschnitt zumindest teilweise umklammern.

Nach einer weiteren Ausführungsform weist der Grundträger ein erstes Aufnahmeelement für das erste Rastelement und ein zweites Aufnahmeelement für das zweite Rastelement auf, wobei die Aufnahmeelemente voneinander beabstandet sind. Der Abstand zwischen den Aufnahmeelementen ist insbesondere größer als der Abstand zweier Aussparungen eines Aufnahmeelements. Die Aufnahmeelemente können zueinander insbesondere denselben Abstand wie die Rastelemente zueinander aufweisen.

Der Abstand zwischen den Aufnahmeelementen kann insbesondere mindestens 1 cm, 2 cm, 3 cm, 4 cm, 5 cm, 6 cm, 7 cm, 8 cm, 9 cm oder 10 cm betragen.

Zwischen dem ersten und dem zweiten Aufnahmeelement kann z.B. eine Grundplatte vorgesehen sein. Die Grundplatte und die beiden Aufnahmeelemente können insbesondere U-förmig angeordnet sein, wobei die Aufnahmeelemente die Schenkel bilden.

Gemäß einer weiteren Ausführungsform weisen die Aufnahmeelemente mehrere, insbesondere parallel zueinander orientierte, Aussparungen auf.

Die Aussparungen der beiden Aufnahmeelemente können insbesondere an derselben Seite, z.B. einer Rückseite oder Vorderseite, vorgesehen sein. Beispielsweise kann das erste Aufnahmeelement an der Außenseite Aussparungen aufweisen, während das zweite Aufnahmeelement an der Innenseite Aussparungen aufweist oder umgekehrt. Alternativ können die Aussparungen auch jeweils an den Innenseiten bzw. Außenseiten angeordnet sein.

Beispielsweise kann das erste und/oder zweite Aufnahmeelement mindestens zwei, drei, vier, fünf, sechs, sieben, acht, neun, zehn oder mehr Aussparungen aufweisen. Die Aussparungen können insbesondere zwischen 1 mm und 10 mm, vorzugsweise 5 mm, voneinander beabstandet sein. Der Dachhaken kann insbesondere auf eine Höhe zwischen

Insbesondere können das erste und das zweite Aufnahmeelement dieselbe Anzahl an Aussparungen und/oder denselben Abstand zwischen den Aussparungen aufweisen.

Je eine Aussparung des ersten Aufnahmeelements und eine Aussparung des zweiten Aufnahmeelements können in derselben Höhe angeordnet sein.

Eine Aussparung, insbesondere sämtliche Aussparungen, kann als längliche, vorzugsweise horizontale, Vertiefung ausgebildet sein.

Die Aussparungen des ersten und des zweiten Aufnahmeelements können insbesondere unterschiedlich geformt sein.

So können die Aussparungen des ersten Aufnahmeelements insbesondere zum Einfädeln bzw. Einschieben des ersten Rastelements ausgebildet sein. Insbesondere kann die Öffnung der Aussparung schräg nach unten verlaufen.

Die Aussparungen des zweiten Aufnahmeelements können hingegen zum Einrasten des zweiten Rastelements ausgebildet sein. Insbesondere kann die Öffnung der Aussparung schräg nach oben verlaufen.

Alternativ zu mehreren Aussparungen kann das erste und/oder zweite Aufnahmeelement auch lediglich eine Aussparung aufweisen. In diesem Fall weisen die Rastelemente vorzugsweise mehrere Rastnasen auf.

Auch der umgekehrte Fall ist denkbar. So kann auch ein Rastelement eine oder mehrere Aussparungen aufweisen, während die Aufnahmeelemente eine oder mehrere Rastnasen aufweisen kann.

Nach einer weiteren Ausführungsform sind die Aufnahmeelemente schräg zu einer Grundplatte des Grundträgers geneigt.

Insbesondere sind die Aufnahmeelemente in dieselbe Richtung geneigt.

Die Aufnahmeelemente können mit der Grundplatte insbesondere einen Winkel von kleiner 90°, vorzugsweise kleiner 85°, 80° oder 75°, einschließen. Beispielsweise kann der Winkel zwischen 60° und 80°, z.B. 70°, betragen. Der Grundträger kann somit U-förmig mit geneigten Schenkeln ausgebildet sein.

Die Erfindung betrifft auch ein Verfahren zur werkzeuglosen Befestigung einer Montageschiene an einem erfindungsgemäßen Dachhaken, bei dem eine Rasteinheit der Rastvorrichtung in der gewünschten Höhe an einem am Verbindungsabschnitt angeordneten Rastabschnitt eingerastet wird.

Erfindungsgemäß wird eine Hülse mittels eines Klemmelements festgeklemmt.

Dazu kann z.B. das Klemmelement zwischen die Hülse und den Verbindungsabschnitt eingeschoben werden. Zum Einschieben können insbesondere Klemmbacken des Klemmelements zusammengedrückt werden.

Vor der Montage der Montageschiene kann der Dachhaken an einer Dachkonstruktion befestigt werden. Zur Befestigung kann insbesondere eine Einhänge-, Klett-, Klammer-, Klemm-, Steck-, Rast-, Magnet-, Zapfen- und/oder Schraubvorrichtung vorgesehen sein. Die Montage und/oder Demontage kann insbesondere werkzeuglos erfolgen.

Verfahren zur Befestigung eines erfindungsgemä-ßen Dachhakens, bei denen der Grundträger an der Dachkonstruktion befestigt wird, sind nicht Teil der Erfindung.

Beispielsweise kann der Grundträger an der Dachkonstruktion verschraubt werden.

Anschließend wird der Rastfuß in der gewünschten Höhe am Grundträger eingerastet. Dies erfolgt vorzugsweise werkzeuglos.

Insbesondere kann ein erstes Rastelement des Rastfußes in einer gewünschten Höhe in eine Aussparung eines ersten Aufnahmeelements eingebracht, z.B. eingefädelt oder eingeschoben, werden. Ein zweites Rastelement des Rastfußes liegt dabei zunächst auf einer Aussparung eines zweiten Aufnahmeelements auf.

Durch eine Betätigung, insbesondere ein Verschieben, der Fixiervorrichtung kann das zweite Rastelement vorzugsweise in die Aussparung des zweiten Aufnahmeelements einrasten.

Alle hier beschriebenen Ausführungsformen und Bauteile der Vorrichtung sind insbesondere dazu ausgebildet, nach den hier beschriebenen Verfahren befestigt zu werden.

Die Erfindung wird im Folgenden beispielhaft unter Bezugnahme auf die Zeichnungen beschrieben. Es zeigen:
- Fig. 1: eine Seitenansicht einer Ausführungsform eines erfindungsgemäßen Dachhakens,
- Fig. 2: eine Perspektivansicht des Dachhakens gemäß Fig. 1,
- Fig. 3: eine Perspektivansicht eines Teils des Dachhakens gemäß Fig. 1 im unmontierten Zustand,
- Fig. 4: eine Seitenansicht eines Teils des Dachhakens gemäß Fig. 1 im montierten Zustand, und
- Fig. 5: eine Vorderansicht eines Teils des Dachhakens gemäß Fig. 1 im montierten Zustand.

Zunächst ist zu bemerken, dass die dargestellten Ausführungsformen rein beispielhafter Natur sind. So können einzelne Merkmale nicht nur in der gezeigten Kombination, sondern auch in Alleinstellung oder in anderen technisch sinnvollen Kombinationen realisiert sein. Beispielsweise können die Merkmale einer Ausführungsform beliebig mit Merkmalen einer anderen Ausführungsform kombiniert werden. Insbesondere kann die Anzahl und/oder Form der Aussparungen bzw. Rastnasen variieren.

Enthält eine Figur ein Bezugszeichen, welches im unmittelbar zugehörigen Beschreibungstext nicht erläutert wird, so wird auf die entsprechenden vorhergehenden bzw. nachfolgenden Ausführungen in der Figurenbeschreibung Bezug genommen. So werden für gleiche bzw. vergleichbare Bauteile in den Figuren dieselben Bezugszeichen verwendet und diese nicht nochmals erläutert.

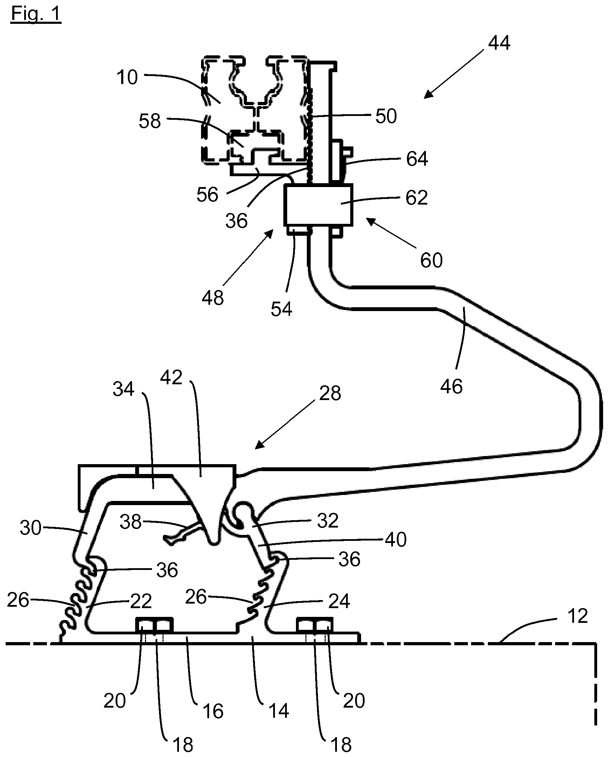

Fig. 1 zeigt einen Dachhaken zur Befestigung einer Montageschiene 10 an einer Dachkonstruktion 12.

Der Dachhaken ist über einen Grundträger 14 an der Dachkonstruktion 12 befestigt. Dazu kann der Grundträger 14 eine Grundplatte 16 mit Plattenaussparungen 18 aufweisen, über die der Grundträger 14 über Schrauben 20 an der Dachkonstruktion 12 festgeschraubt wird.

Die Grundplatte 16 des Grundträgers 14 ist parallel zur Dachkonstruktion 12 angeordnet. Ein erstes Aufnahmeelement 22 und ein zweites Aufnahmeelement 24 erstrecken sich schräg zur Grundplatte 16.

An der Außenseite des ersten Aufnahmeelements 22 sowie an der Innenseite des zweiten Aufnahmeelements 24 sind jeweils mehrere, z.B. fünf, Aussparungen 26 vorgesehen. Die Aufnahmeelemente 22, 24 sowie die Grundplatte 16 sind gewissermaßen U-förmig angeordnet.

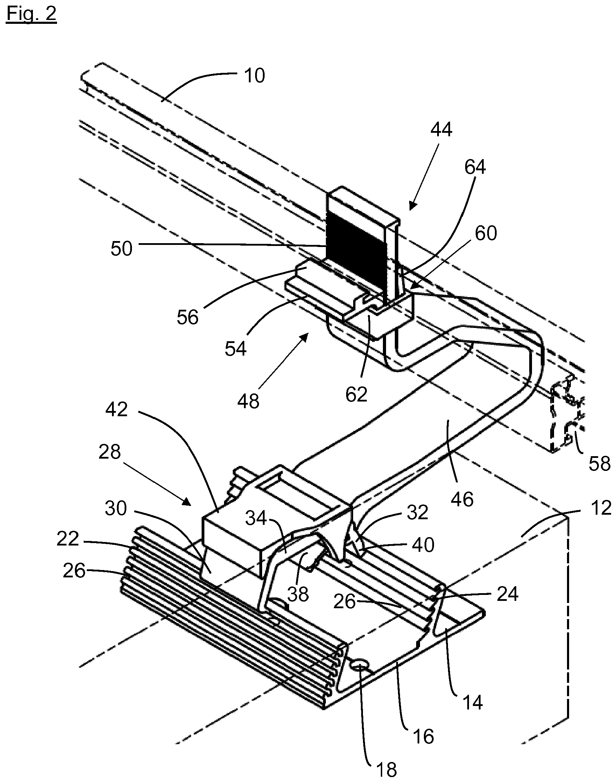

Wie in der Perspektivansicht in Fig. 2 zu sehen ist, erstrecken sich die Aussparungen 26 als längliche Vertiefungen in horizontaler Richtung.

Ein Rastfuß 28 des Dachhakens kann am Grundträger 14 verrastet werden. Insbesondere kann der Rastfuß 28 schmäler als der Grundträger 14 ausgebildet sein. So kann die Position des Rastfußes 28 am Grundträger 14 angepasst werden.

Der Rastfuß 28 und der Grundträger 14 sind als separate Bauteile ausgebildet. So kann zunächst der Grundträger 14 montiert werden, ohne dass der restliche Dachhaken dabei hinderlich ist.

Der Rastfuß 28 weist ein erstes Rastelement 30 und ein zweites Rastelement 32 auf. Die Rastelemente 30, 32 sind voneinander beabstandet und über einen Brückenabschnitt 34 miteinander verbunden.

Die Rastelemente 30, 32 und der Brückenabschnitt 34 sind gewissermaßen U-förmig angeordnet. Das zweite Rastelement 32 ist insbesondere gelenkig am Brückenabschnitt 34 gelagert und relativ zum Brückenabschnitt 34 und/oder zum ersten Rastelement 30 verschwenkbar.

Jedes Rastelement 30, 32 weist eine Rastnase 36 auf. Die Rastnasen 36 können insbesondere unterschiedlich geformt sein. So kann die Rastnase 36 des ersten Rastelements 30 in eine sich im Wesentlichen schräg von oben nach unten erstreckende Aussparung 26 des ersten Aufnahmeelements 22 eingefädelt werden.

Das zweite Rastelement 32 weist zwei Schenkel 38, 40 auf, welche z.B. V-förmig zueinander angeordnet sind. Ein Schenkel 40 kann dabei eine Rastnase 36 zum Einrasten in eine sich im Wesentlichen schräg von unten nach oben erstreckende Aussparung 26 des zweiten Aufnahmeelements 24 aufweisen.

Der andere Schenkel 38 kann von einer relativ zum Brückenabschnitt 34 verschiebbar gelagerten Fixiervorrichtung 42 fixiert werden.

Zunächst wird das erste Rastelement 30 des Rastfußes 28 in einer gewünschten Höhe in eine Aussparung 26 des ersten Aufnahmeelements 22 eingebracht, z.B. eingehakt. Das zweite Rastelement 40 des Rastfußes 28 liegt dabei zunächst auf einer Aussparung 26 des zweiten Aufnahmeelements 24 auf.

Durch eine Betätigung, insbesondere ein Verschieben, der Fixiervorrichtung 42 in Richtung des zweiten Rastelements 32 rastet die Rastnase 36 des Schenkels 40 des zweiten Rastelements 40 in die Aussparung 26 ein.

Dabei wird die Fixiervorrichtung 42 insbesondere über einen nicht gezeigten Vorsprung des Schenkels 38 bewegt, wodurch das zweite Rastelement 32 verschwenkt wird.

Die Fixiervorrichtung 42 fixiert das zweite Rastelement 32 in der Rastposition.

Der Dachhaken umfasst einen Schienenträger 44 zur Befestigung der Montageschiene 10 am Dachhaken.

Der Schienenträger 44 ist über einen Verbindungsabschnitt 46 mit dem Rastfuß 28 verbunden.

Der Schienenträger 44 weist eine Rastvorrichtung 48 zur höhenverstellbaren Befestigung der Montageschiene 10 am Dachhaken auf.

Die Rastvorrichtung 48 weist einen am Verbindungsabschnitt 46 angeordneten Rastabschnitt 50 mit mehreren, parallel zueinander orientierten, sich in horizontaler Richtung längs erstreckenden Aussparungen 52 auf.

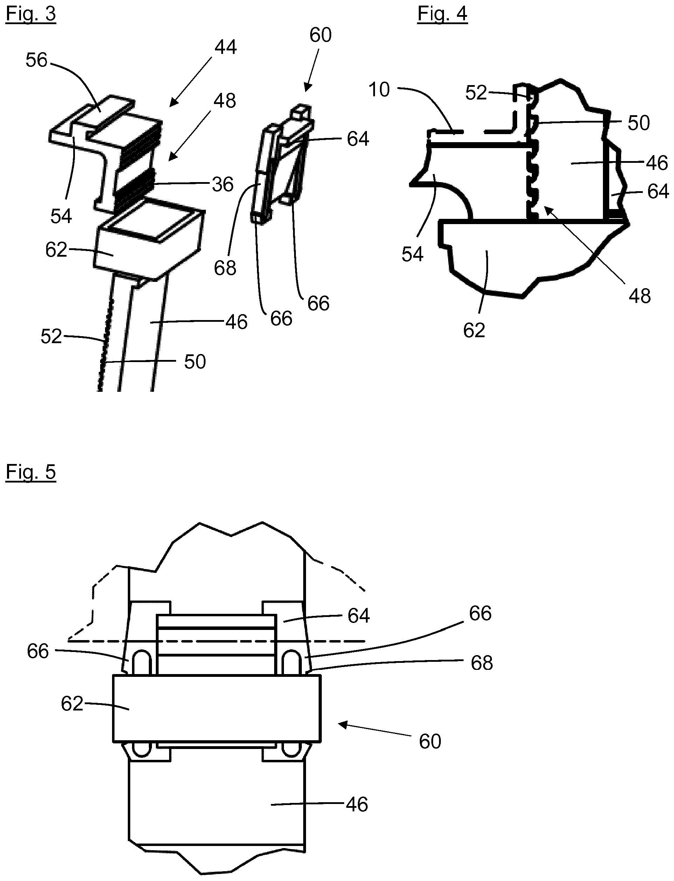

Detailansichten sind auch in den Fig. 3 bis 5 dargestellt.

Die Rastvorrichtung 48 weist eine Rasteinheit 54 auf. Die Rasteinheit 54 und der Rastabschnitt 50 sind als separate Bauteile ausgebildet.

Die Rasteinheit 54 weist mehrere Rastnasen 36 auf, welche in die Aussparungen 52 des Rastabschnitts 50 einrasten können.

An einem oberen Bereich weist die Rasteinheit 54 ein Auflage- und/oder Eingreifelement 56 auf. Die Montageschiene 10 kann auf dem Auflage- und/oder Eingreifelement 56 aufliegen. Das Auflage- und/oder Eingreifelement 56 kann insbesondere flächig ausgebildet sein und/oder sich im montierten Zustand rechtwinklig zum Verbindungsabschnitt 46 bzw. zum Rastabschnitt 50 erstrecken. Ferner kann das Auflage- und/oder Eingreifelement 56 in eine Nut 58 der Montageschiene 10 eingreifen.

Der Schienenträger 44 umfasst eine Klemmvorrichtung 60, welche dazu ausgebildet ist, die Rasteinheit 54 in einer Rastposition am Rastabschnitt 50 zu fixieren.

Dazu weist die Klemmvorrichtung 60 eine Hülse 62 auf, welche um den Verbindungsabschnitt 46 angeordnet ist.

Die Klemmvorrichtung 60 weist ein als Klammer 64 ausgebildetes Klemmelement auf. Die Klammer 64 kann in einen Spalt zwischen der Hülse 62 und dem Verbindungsabschnitt 46 gesteckt werden, um die Hülse 62 zu fixieren.

Dadurch wird auch die Rasteinheit 54, welche an einer zur Klammer 64 gegenüberliegenden Seite zwischen der Hülse 62 und dem Verbindungsabschnitt 46 angeordnet ist, festgeklemmt und kann in der Rastposition in der gewünschten Höhe fixiert werden.

Wie in Fig. 5 zu sehen ist, kann die Klammer 64 zwei Klemmbacken 66 aufweisen. Diese können beweglich, insbesondere federnd, ausgebildet sein. So können diese zusammengedrückt werden, um in den Bereich zwischen der Hülse 62 und dem Verbindungsabschnitt 46 eingeschoben werden zu können.

Unterhalb der Hülse 62 können sich die Klemmbacken 66 wieder entspannen. Die Hülse 62 ist auf diese Weise zusätzlich in Einkerbungen 68 der Klemmbacken 66 fixiert.

### Bezugszeichenliste

- 10: Montageschiene
- 12: Dachkonstruktion
- 14: Grundträger
- 16: Grundplatte
- 18: Plattenaussparung
- 20: Schraube
- 22: erstes Aufnahmeelement
- 24: zweites Aufnahmeelement
- 26: Aussparung
- 28: Rastfuß
- 30: erstes Rastelement
- 32: zweites Rastelement
- 34: Brückenabschnitt
- 36: Rastnase
- 38: Schenkel
- 40: Schenkel
- 42: Fixiervorrichtung
- 44: Schienenträger
- 46: Verbindungsabschnitt
- 48: Rastvorrichtung
- 50: Rastabschnitt
- 52: Aussparung
- 54: Rasteinheit
- 56: Auflage- und/oder Eingreifelement
- 58: Nut
- 60: Klemmvorrichtung
- 62: Hülse
- 64: Klammer, Klemmelement
- 66: Klemmbacke
- 68: Einkerbung

## Patentansprüche

1. Dachhaken zur Befestigung einer Montageschiene (10) an einer Dachkonstruktion (12), umfassend
einen Grundträger (14) zur Befestigung des Dachhakens an der Dachkonstruktion (12),
einen Schienenträger (44) zur Befestigung der Montageschiene (10) am Dachhaken,
einen mit dem Grundträger (14) verbundenen oder verbindbaren Fuß (28), und
einen Verbindungsabschnitt (46), der den Fuß (28) mit dem Schienenträger (44) verbindet,
wobei der Schienenträger (44) eine Rastvorrichtung (48) zur höhenverstellbaren und werkzeuglosen Befestigung der Montageschiene (10) am Dachhaken aufweist, wobei
die Rastvorrichtung (48) einen am Verbindungsabschnitt (46) angeordneten Rastabschnitt (50) aufweist,
die Rastvorrichtung (48) eine Rasteinheit (54) aufweist, wobei die Rasteinheit (54) und der Rastabschnitt (50) als separate Bauteile ausgebildet sind, der Schienenträger (44) eine Klemmvorrichtung (60) zum Fixieren der Rasteinheit (54) in einer Rastposition aufweist, wobei
die Klemmvorrichtung (60) eine Hülse (62) und ein Klemmelement (64) aufweist,
wobei die Rasteinheit (54) ein Auflageelement und/oder ein Eingreifelement (56) für die Montageschiene (10) aufweist,
wobei das Klemmelement (64) in einen Spalt zwischen der Hülse (62) und dem Verbindungsabschnitt (46) platziert wird, um die Hülse (62) zu fixieren,
wodurch die Rasteinheit (54) zwischen der Hülse (62) und dem Verbindungsabschnitt (46) festgeklemmt wird,
und wodurch die Montageschiene (10) zwischen dem Auflage- und/oder Eingreifelement (56) und dem Verbindungsabschnitt (46) bzw. dem Rastabschnitt (50) eingeklemmt wird.

2. Dachhaken nach Anspruch 1,
**dadurch gekennzeichnet,**
**dass** der Rastabschnitt (50) mehrere, insbesondere parallel zueinander orientierte, Aussparungen (52) aufweist.

3. Dachhaken nach Anspruch 1 oder 2,
**dadurch gekennzeichnet,**
**dass** die Rasteinheit (54) und der Rastabschnitt (50) relativ zueinander bewegbar, insbesondere verschiebbar, sind.

4. Dachhaken nach einem der vorhergehenden Ansprüche,
**dadurch gekennzeichnet,**
**dass** das Klemmelement (64) als Klammer ausgebildet ist.

5. Dachhaken nach einem der vorhergehenden Ansprüche,
**dadurch gekennzeichnet,**
**dass** das Klemmelement (64) als Klemmkeil ausgebildet ist.

6. Verfahren zur werkzeuglosen Befestigung einer Montageschiene (10) an einem Dachhaken nach einem der vorhergehenden Ansprüche, bei dem das Klemmelement (64) in einen Spalt zwischen der Hülse (62) und dem Verbindungsabschnitt (46) platziert wird, um die Hülse (62) zu fixieren, wobei die Rasteinheit (54) der Rastvorrichtung (48), welche zwischen der Hülse (62) und dem Verbindungsabschnitt (46) festgeklemmt wird, in der gewünschten Höhe an einem am Verbindungsabschnitt (46) angeordneten Rastabschnitt (50) eingerastet wird, und somit die Montageschiene (10) zwischen dem Auflageund/oder Eingreifelement (56) und dem Verbindungsabschnitt (46) bzw. dem Rastabschnitt (50) eingeklemmt wird.

7. Verfahren nach Anspruch 6,
**dadurch gekennzeichnet,**
**dass** das Klemmelement (64) zwischen die Hülse (62) und den Verbindungsabschnitt (46) eingeschoben wird.

## Claims

1. Roof hook for fastening a mounting rail (10) to a roof structure (12), comprising
a base support (14) for fastening the roof hook to the roof structure (12), a rail support (44) for fastening the mounting rail (10) to the roof hook, a foot (28) connected or connectable to the base support (14), and
a connecting section (46), which connects the foot (28) to the rail support (44), wherein
the rail support (44) has a latching device (48) for height-adjustable and tool-free fastening of the mounting rail (10) to the roof hook, wherein the latching device (48) has a latching section (50) disposed at the connecting section (46),
the latching device (48) has a latching unit (54), wherein the latching unit (54) and the latching section (50) are configured as separate components, the rail support (44) has a clamping device (60) for fixing the latching unit (54) in a latching position, wherein the clamping device (60) has a sleeve (62) and a clamping member (64), wherein
the latching unit (54) has a support member and/or an engagement member (56) for the mounting rail (10), wherein
the clamping member (64) is placed in a gap between the sleeve (62) and the connecting section (46) to fix the sleeve (62),
as a result of which the latching unit (54) is firmly clamped between the sleeve (62) and the connecting section (46),
and as a result of which the mounting rail (10) is clamped between the support and/or engagement member (56) and the connecting section (46) or the latching section (50).

2. Roof hook according to claim 1,
**characterised in that**
the latching section (50) has a plurality of recesses (52), in particular aligned parallel with one another.

3. Roof hook according to claims 1 or 2,
**characterised in that**
the latching unit (54) and the latching section (50) can be moved, in particular displaced, relative to one another.

4. Roof hook according to any of the preceding claims,
**characterised in that**
the clamping member (64) is designed as a peg.

5. Roof hook according to any of the preceding claims,
**characterised in that**
the clamping member (64) is configured as a clamping wedge.

6. Method for tool-free fastening of a mounting rail (10) to a roof hook according any of the preceding claims, in which the clamping member (64) is placed in a gap between the sleeve (62) and the connecting section (46) in order to fix the sleeve (62), wherein the latching unit (54) of the latching device (48), which is firmly clamped between the sleeve (62) and the connecting section (46), is latched at the desired height onto a latching section (50) disposed on the connecting section (46), and thus the mounting rail (10) is clamped between the support and/or engagement member (56) and the connecting section (46) or the latching section (50).

7. Method according to claim 6,
**characterised in that**
the clamping member (64) is inserted between the sleeve (62) and the connecting section (46).

## Revendications

1. Crochet de toit destiné à fixer un rail de montage (10) à une construction de toit (12), comprenant
un support de base (14) destiné à fixer le crochet de toit à la construction de toit (12),
un support de rail (44) destiné à fixer le rail de montage (10) au crochet de toit,
un pied (28) relié ou susceptible d'être relié au support de base (14), et
une partie de liaison (46) qui relie le pied (28) au support de rail (44),
dans lequel
le support de rail (44) présente un dispositif d'enclenchement (48) pour la fixation réglable en hauteur et réalisable sans outil du rail de montage (10) au crochet de toit,
le dispositif d'enclenchement (48) présente une partie d'enclenchement (50) disposée sur la partie de liaison (46),
le dispositif d'enclenchement (48) présente une unité d'enclenchement (54), l'unité d'enclenchement (54) et la partie d'enclenchement (50) étant réalisées sous forme de composants séparés,
le support de rail (44) présente un dispositif de serrage (60) destiné à fixer l'unité d'enclenchement (54) dans une position d'enclenchement,
le dispositif de serrage (60) présente une douille (62) et un élément de serrage (64),
l'unité d'enclenchement (54) présente un élément d'appui et/ou un élément d'engagement (56) pour le rail de montage (10),
l'élément de serrage (64) est placé dans un intervalle entre la douille (62) et la partie de liaison (46), afin de fixer la douille (62),
moyennant quoi l'unité d'enclenchement (54) est serrée entre la douille (62) et la partie de liaison (46),
et moyennant quoi le rail de montage (10) est serré entre l'élément d'appui et/ou d'engagement (56) et la partie de liaison (46) ou la partie d'enclenchement (50).

2. Crochet de toit selon la revendication 1,
**caractérisé en ce que**
**que** la partie d'enclenchement (50) présente plusieurs évidements (52), en particulier orientés parallèlement les uns aux autres.

3. Crochet de toit selon la revendication 1 ou 2,
**caractérisé en ce que**
l'unité d'enclenchement (54) et la partie d'enclenchement (50) sont mobiles l'une par rapport à l'autre, en particulier en translation.

4. Crochet de toit selon l'une des revendications précédentes,
**caractérisé en ce que**
l'élément de serrage (64) est réalisé sous forme d'agrafe.

5. Crochet de toit selon l'une des revendications précédentes,
**caractérisé en ce que**
l'élément de serrage (64) est réalisé sous forme de cale de serrage.

6. Procédé de fixation, réalisable sans outil, d'un rail de montage (10) à un crochet de toit selon l'une des revendications précédentes, dans lequel
l'élément de serrage (64) est placé dans un intervalle entre la douille (62) et la partie de liaison (46), afin de fixer la douille (62),
l'unité d'enclenchement (54) du dispositif d'enclenchement (48) serrée entre la douille (52) et la partie de liaison (46) est enclenchée, à la hauteur souhaitée, sur une partie d'enclenchement (50) disposée sur la partie de liaison (46), moyennant quoi le rail de montage (10) est serré entre l'élément d'appui et/ou d'engagement (56) et la partie de liaison (46) ou la partie d'enclenchement (50).

7. Procédé selon la revendication 6,
**caractérisé en ce que**
l'élément de serrage (64) est inséré entre la douille (2) et la partie de liaison (46).
